# EUROPEAN PATENT SPECIFICATION

(11) **EP 4 268 924 B1**
(45) Date of publication and mention of the grant of the patent: **23.04.2025**
(21) Application number: 22305613.6
(22) Date of filing: 26.04.2022
(51) Int. Cl.: B01D 25/26

(54) **FILTER ELEMENT AND FILTER COMPRISING AT LEAST TWO FILTER ELEMENTS**
FILTERELEMENT UND FILTER MIT MINDESTENS ZWEI FILTERELEMENTEN
ÉLÉMENT FILTRANT ET FILTRE COMPRENANT AU MOINS DEUX DE CES ÉLÉMENTS

(43) Date of publication of application: 01.11.2023
(73) Proprietor: Alfa Laval Moatti, 78990 Elancourt (FR)
(72) Inventor: NICOLLE, Adrien, 78990 ELANCOURT (FR)
(74) Representative: Alfa Laval Attorneys

(56) References cited:
- EP-A1- 1 091 791
- EP-A1- 3 199 219
- WO-A1-2012/028824

## Description

### TECHNICAL FIELD

The invention relates to a filter element having a filtering mesh extending between two concentric edges, to a pair of such filter elements arranged one against the other and to a filter comprising a plurality of such filter elements, stacked along an axis. More particularly, the invention relates to an improvement of filter element.

### TECHNOLOGICAL BACKGROUND

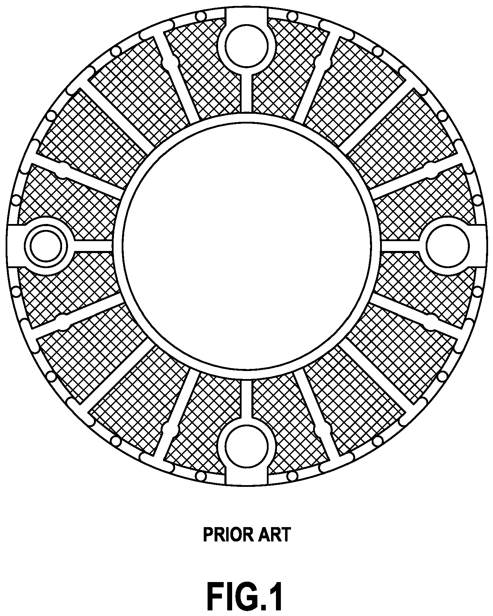

The European patent published under the number 1 091 791 describes a filter structure using annular flat filter elements, each having an internal face, an external face, and a filtering mesh. Figure 1 of the present application depicts such a filter element. The filtering mesh is annular and extends between two concentric edges, respectively an inner edge and an outer edge. Radial ribs that are regularly distributed circumferentially and that extend in axial correspondence on opposite sides of the filtering mesh between said concentric edges serve to form sectors on the internal face and on the external face. Such filter elements are designed to be assembled against each other in such a manner that their facing internal faces define a space that is compartmented circumferentially by the contacting radial ribs of said internal faces. For each sector, passages are arranged in the inner and outer edges. By stacking a selected number of filter element pairs, a desired filter area is obtained for an intended application. Typically, the fluid to be filtered penetrates into the stack via passages situated in the inner edge, passes through the filtering meshes, and, once purified, exits via the passages defined in the outer edge.

In addition, such filters generally comprise a backflush system configured to selectively reverse the flow in some sectors of the filter elements in order to de-clog the filtering mesh within said sector. However, the alternation between direct and reverse flows put a shear load on the wires of the filtering mesh which are crossed by a radial rib: these wires may then brake out of fatigue after a certain number of cycles. Particularly, this shear load is maximal in each location where the wires of the filtering mesh are crossed substantially orthogonally by a rib of the filter element.

And yet, in such a known filter element, as evidenced in Figure 1, some radial ribs necessarily extend substantially orthogonal to one of the main direction of the meshing of the filtering mesh: this is the case on Fig. 1 at 45°, 135°, 225° and 315°. Consequently, such radial ribs cross substantially orthogonally a large number of successive wires along said rib from the inner edge to the outer edge.

Consequently, such a configuration may lead to the rupture of an increasing number of consecutive wires over the time. Although such ruptures do not substantially impede the filtration function of the filter element, they may in the end reduce the lifetime of the filter element.

Such a phenomenon is particularly concerning in more recent filter elements which include reinforcing ribs in addition to the usual radial ribs. Indeed, in such a filter element, as disclosed for example in the European patent published under the number 3 199 219, each sector is reinforced by additional ribs extending radially and/or in inclined directions. As a result, because of the increased number of ribs, and of the resulting increased number of directions taken by these ribs, the probability that some of these ribs extend substantially orthogonal to wires of the filtering mesh is all the more increased.

Therefore, there is room for a new type of filters having improved durability.

### SUMMARY OF THE INVENTION

The present disclosure relates to a filter element, having an internal face, an external face, a filtering mesh, two concentric edges, respectively an inner edge and an outer edge between which said filtering mesh extends, and main ribs provided at least on the internal face, said main ribs extending substantially radially between said edges and being distributed circumferentially in order to form sectors on said internal face, said filter element being configured to be assembled against a corresponding filter element so that said internal face faces the internal face of said corresponding filter element and said main ribs delimiting the sectors act to circumferentially form compartments in a space between said internal face and said corresponding filter element, said inner edge having inner passages respectively communicating with corresponding ones of the sectors, wherein at least one rib extending between said edges is a curved rib which is curved over its whole length.

The concentric edges are generally circular about a central axis, hereafter referred to as defining an axial direction. The main ribs are optionally regularly distributed circumferentially in order to form the sectors on said internal face. A radial direction is a direction perpendicular to the central axis and intersecting the central axis. An axial plane is a plane including the central axis. A radial plane is a plane perpendicular to the central axis. A circumference is a circle included in a radial plane and having its center on the central axis. A tangential or circumferential direction is a direction which is at a tangent to a circumference; it is perpendicular to the central axis but does not intersect the central axis. A corresponding filter element, as referred to herein, may be a filter element substantially similar or identical to the filter element, or a filter element of a non-similar but complementary shape, and, in particular, having a filtering mesh extending between concentric inner and outer edges. Such corresponding filter element possibly has main ribs intended to come into contact with the main ribs of the internal face of the filter element so as to define the compartments, when the filter element and the corresponding filter element are assembled.

Thus, the main ribs are ribs that extend substantially in a radial direction. Particularly, in the present disclosure, the extension direction of any curved rib, or more generally of any curve portion, is defined as the direction of the chord of said curved rib, or more generally of said curve portion. Also, since the outer edge is generally circular about the central axis, the plane in which the outer edge extends is a radial plane.

Thanks to this filter arrangement, including at least one curved rib, it is possible to prevent or at least reduce the tear phenomenon described above. Indeed, because said rib is curved, the number of consecutive wires crossed orthogonally by said rib is necessarily reduced: consequently, the areas likely to be concerned by wire ruptures are restricted. In addition, and in any case, because said rib is curved, warp wires regularly emerge from the rib and mesh with the weft wires exposed to the shear hazard: therefore, these warp wires can take up part of the load undergone by these weft wires, which prevents the crack from spreading over too high a distance.

Thus, thanks to this filter arrangement, it is possible to prevent or to delay the rupture of wires of the filtering mesh or, at least, to confine these ruptures in very restricted areas so that the filtering function of the filter element is not substantially impeded.

In the present disclosure, a curved rib is formed by a single curve portion or several curve portions joined by angular points or singular points. Specifically, this means that such a curved rib is devoid of any rectilinear segment.

In some embodiments, each curve portion of such a curved rib has, locally, a radius of curvature at least 5 times greater, preferably at least 10 times greater, than the pitch between two successive wires of the filtering mesh and less than 100 times greater than this pitch.

In some embodiments, at least some of the main ribs, preferably most of the main ribs or even all of the main ribs, are curved ribs. Of course, the more numerous are the curved ribs, and therefore the less numerous are the rectilinear ribs, the better the tear phenomenon can be prevented.

In some embodiments, the main ribs include main ribs of a first type, connecting directly the inner and outer edges, and main ribs of a second type, connecting the inner and outer edges via an eyelet defining an assembling hole. Consequently, it is understood that the main ribs of the first type are devoid of eyelet. Such an assembling hole enables to stack several filter elements by inserting an assembly rod into the assembling holes of each filter element. The outline of the eyelet therefore forms a curve portion for such a main rib of the second type. In this respect, the outline of such an eyelet is preferably circular.

In some embodiments, at least some of the main ribs of the first type, preferably most of the main ribs of the first type or even all of the main ribs of the first type, are curved ribs.

In some embodiments, said curved main ribs of the first type each comprise a single or two curve portions. Preferably, said curved main ribs of the first type comprise a single curve portion. A simple outline is indeed preferred to ensure a proper watertightness between the sectors.

In some embodiments, at least two successive main ribs of the first type are curved ribs and the concavity of the first one among said two successive main ribs of the first type is directed toward the concavity of the second one among said two successive main ribs of the first type.

In some embodiments, at least some of the main ribs of the second type, preferably most of the main ribs of the second type or even all of the main ribs of the second type, are curved ribs.

In some embodiments, said curved main ribs of the second type each comprise an inner link connecting their eyelet to the inner edge, said inner link comprising a single curve portion.

In some embodiments, said inner link is substantially tangent to the outline of the eyelet. When the filter element is produced by injection, such a configuration eases the spread of the injection material toward the eyelet.

In some embodiments, two successive main ribs of the second type are curved ribs and the concavity of the inner link of the first one among said two successive main ribs of the second type is directed toward the concavity of the inner link of the second one among said two successive main ribs of the second type.

In some embodiments, the angle formed between a curved main rib and the inner edge is comprised between 60° and 85°, preferably between 75° and 85°. Such an angle range is a good compromise between the benefit of having an angle low enough to get a significant curvature and the benefit of having an angle high enough to ease the flow of injection material toward the rib during the manufacturing process.

In some embodiments, the angle formed between a curved main rib of the first type and the outer edge is comprised between 60° and 85°, preferably between 75° and 85°.

In some embodiments, at least some of the sectors, preferably most of the sectors or even all of the sectors, are each provided with at least one reinforcing rib connecting at least a main rib to an edge. Thanks to these reinforcing ribs, the filtering mesh surface available for filtering is increased as compared with prior art devices, as the size of the filter element can be increased and the reinforcing ribs may be smaller in size and require less material than the main ribs. The pressure loss is reduced due to the increase in the available filtering mesh surface. Also, this arrangement makes it possible to design a filter element having similar mechanical strength as a filter element without reinforcing ribs while being made of material having intrinsically a lower mechanical strength. Specifically, the filtering mesh can be less resistant per se while, due to the reinforcing ribs, achieving the expected mechanical strength. Preferably, the surface of the reinforcing ribs is recessed with respect to the surface of the main ribs: consequently, the impact of the reinforcing ribs on the flow to be filtered is reduced during the functioning of the filter.

In some embodiments, at least some of the reinforcing ribs, preferably most of the reinforcing ribs or even all of the reinforcing ribs, are curved ribs.

In some embodiments, the reinforcing ribs include reinforcing ribs of a first type, not connected to any main rib of the second type, and reinforcing ribs of a second type, connected to at least one main rib of the second type.

In some embodiments, at least one reinforcing rib of the second type is connected to the eyelet of said main rib of the second type. This is preferably the case for most or even all the reinforcing ribs of the second type. When the filter element is produced by injection, such a configuration eases the spread of the injection material toward the eyelet.

In some embodiments, both sides of each eyelet are connected in such a way by a distinct reinforcing rib of the second type. Preferably, at least one of these reinforcing ribs converges toward the eyelet from the inner side. Indeed, the injection of such filter elements is usually carried out from the inner side toward the outer side of the filter element. Preferably, at least one of these reinforcing ribs is tangent to the outline of the eyelet. This may also ease the flow of injection material during the injection.

In some embodiments, at least one reinforcing rib comprises several branches connected to at least three, preferably four, elements among both edges and both neighboring main ribs. Thanks to such a configuration, the filter element is all the more reinforced and the flow of injection material is all the more eased during the injection.

In some embodiments, the branches of at least one reinforcing rib of the first type converge toward a branch connected to the outer edge. Such an orientation reduces the impact of the reinforcing rib on the flow of the fluid to be filtered, during the functioning of the filter.

In some embodiments, the branches of at least one reinforcing rib of the second type converge toward a link connected to the inner edge. Such an orientation eases the flow of injection material toward the outer side of the filter element, and particularly toward the eyelet, during the injection.

In some embodiments, at least some of the reinforcing ribs have a Psi shape (Ψ), including a central link, connecting the inner and outer edges, and two converging links, each extending from a distinct main rib and converging toward the outer or the inner side to join the central link, preferably at offset joining points. However, these joining points may also be common. Preferably, the converging links converge toward the outer side. Such a shape helps to ease the flow of injection material toward the outer side during the injection while reducing the impact of the reinforcing ribs on the flow of fluid to be filtered during the functioning of the filter.

In some embodiments, at least some of the reinforcing ribs have an Aleph shape ( 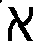 ) including a central link, connecting the inner and outer edges, a diverging link, diverging from the central link toward the outer side to connect a first main rib, and a converging link, converging from the second main rib toward the outer side to join the central link. Such a shape is particularly adapted to ease the flow of injection material toward an eyelet during the injection while limiting the impact of the reinforcing rib on the flow of fluid to be filtered during the functioning of the filter.

In some embodiments, said reinforcing rib divides the filtering mesh surface of the sector in areas of substantially similar size. In the present disclosure, substantially equal areas are areas which differ from each other by not more than 50%. In those embodiments, the stresses in the filtering mesh are thus balanced between all areas.

In some embodiments, the ratio of the filtering mesh surface available for filtering to the total filtering mesh surface is at least 70%, preferably at least 75%. The special arrangement of the reinforcing ribs enables to increase the ratio of the filtering mesh surface available for filtering to the total filtering mesh surface, so as to improve efficiency of the filter element.

In some embodiments, the angle formed between a curved reinforcing rib and the inner edge is comprised between 60° and 85°, preferably between 75° and 85°.

In some embodiments, the angle formed between a curved reinforcing rib and the outer edge is comprised between 60° and 85°, preferably between 75° and 85°.

In some embodiments, at least some of the main ribs, preferably most of the main ribs or even all of the main ribs, are connected to the inner edge between two successive inner passages.

In some embodiments, at least some of the reinforcing ribs, preferably most of the reinforcing ribs or even all of the reinforcing ribs, are connected to the inner edge at an inner passage.

In some embodiments, the outer edge comprises outer passages on the external face. Such passages enable the filtered fluid to exit the filter element.

In some embodiments, at least some of the main ribs, preferably most of the main ribs or even all of the main ribs, are connected to the outer edge between two successive outer passages. This eases the flow of the fluid to be filtered towards the outlet passages and thus decreases pressure losses during the functioning of the filter.

In some embodiments, at least some of the reinforcing ribs, preferably most of the reinforcing ribs or even all of the reinforcing ribs, are connected to the outer edge between two successive outer passages. This eases the flow of the fluid to be filtered towards the outlet passages and thus decreases pressure losses during the functioning of the filter.

In some embodiments, the reinforcing ribs extending on either side of one of the main ribs are connected to said one main rib at different locations in the radial direction. The stresses in the main rib are thus distributed over different locations. In addition, when two filter elements are assembled against each other, the reinforcing ribs of the respective filter elements are at least partly shifted from one another, which leaves more room for the fluid to flow and decreases pressure losses of the filter elements.

In some embodiments, the inner edge and/or the outer edge is circular. However, in other embodiments, the inner edge and/or the outer edge, while being generally circular, has a wavy outline. Indeed, when the diameter of the edge is very large, the curvature of a circular edge may become negligible at the scale of the meshing: such a wavy outline therefore increases the curvature of the edge at the local scale without altering the general structure of the filter element at the global scale.

In some embodiments, the outer edge comprises a recess at least in a contact area where a main rib contacts the outer edge. Such a recess can be provided on the internal face and/or the external face. Such a recess enables to limit the accumulation of injection material during the injection in a portion of the filter element which would be particularly thick without such a recess. Indeed, when too much injection material is accumulated in a small area during the injection, a hot point appears and delays the cooling of this mass of injection material: a shrinkage phenomenon then appears when these portions finally cool down while their surrounding is already solidified, which alters the intended dimensions of the final part. Thus, such a recess enables to prevent or at least to reduce this shrinkage phenomenon.

In some embodiments, the outer edge comprises a notch at least in a contact area of a first type where a main rib of the first type contacts the outer edge. Preferably, said notch is provided in the extension of said main rib of the first type. Preferably, the width of said notch is equal or lower to the width of said main rib of the first type.

In some embodiments, the eyelet of at least one of the main ribs of the second type, preferably of most of the main ribs of the second type or even of each of the main ribs of the second type, contacts the outer edge.

In some embodiments, the outer edge comprises an axial depression at least in a contact area of a second type where an eyelet contacts the outer edge. Preferably, for a given eyelet, an axial depression is provided on both the internal face and the external face. Preferably, the width of said axial depression is comprised between 50% and 100% of the inner diameter of the assembling hole.

In some embodiments, the inner edge comprises at least one relief provided on the external face at the back of at least one inner passage. Said relief can be a protrusion or a recess. Such a relief forms an obstacle which slows down the flow of injection material during the injection. This helps balancing the spread speed of the injection material on both side of the filtering mesh. Indeed, in case the injection cavity is filled more rapidly on one side of filtering mesh, a pressure force appears and pushes the filtering mesh toward the opposite side, which may alter the correct position of the filtering mesh in the final part.

In some embodiments, the inner edge comprises two reliefs at the back of each inner passage. Preferably, one of them is a protrusion and the other one is a recess, the shape thereof being complementary to that of the protrusion. Thanks to such a configuration, the protrusion of a filter element can be received in the recess of a subsequent filter element, thus forming a labyrinth improving the tightness of their interface.

In some embodiments, the filtering mesh has a conical shape. This decreases the pressure loss and enables to strengthen the connection between the edges and the filtering mesh in the vicinity of the inner passages. Thus, greater flows can be filtered through the filter.

In some embodiments, the main ribs also protrude on the external face so as to form sectors on said external face.

In some embodiments, the diameter of the outer edge may be comprised between 100 and 600 mm.

In some embodiments, the main ribs and/or the reinforcing ribs are made of polymer. However, it is of course still possible to use a more conventional material for making ribs on filter elements, such as metal and notably aluminum.

In some embodiments, the filtering mesh is free of supporting mesh.

The present disclosure also relates to a pair of filter elements according to any one of the above embodiments, arranged one against the other, so that their respective internal faces face each other and the contacting main ribs of said respective internal faces partition the space between said internal faces.

The present disclosure also relates to a filter comprising a plurality of filter elements according to any one of the above embodiments, said filter elements being stacked along an axis.

The above mentioned features and advantages, and others, will become apparent when reading the following detailed description of exemplary embodiments of the presented filter element and the filter. This detailed description refers to the accompanying drawings.

### BRIEF DESCRIPTION OF THE DRAWINGS

The invention and advantages thereof will be better understood upon reading the detailed description which follows, of embodiments of the invention given as non-limiting examples. This description refers to the appended drawings, wherein:
- Fig. 1 illustrates a filter element of the prior art.
- Fig. 2 illustrates a perspective view of the internal face of a filter element according to an example;
- Fig. 3 illustrates a front view of the internal face of the filter element of Fig. 2;
- Fig. 4 illustrates a perspective view of the external face of the filter element of Fig. 2;
- Fig. 5 illustrates a front view of the external face of the filter element of Fig. 2;
- Fig. 6 is a partial perspective view of a filter comprising two filter elements stacked one on the other;
- Fig. 7 is an enlarged view of the frame VII of Fig. 3.

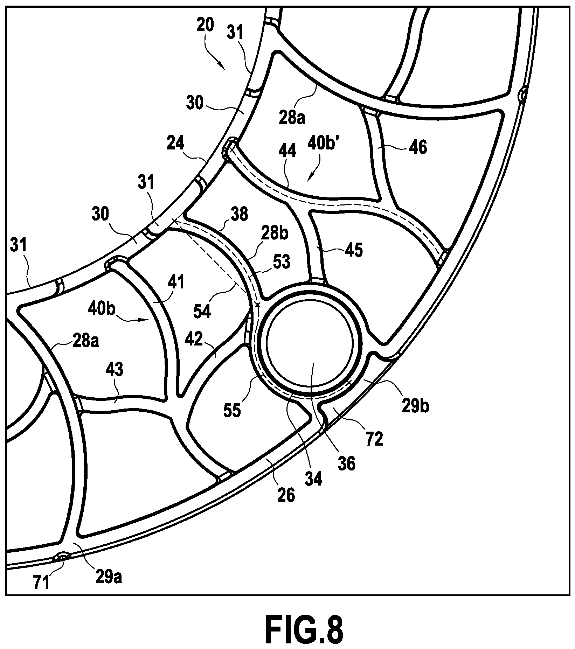

- Fig. 8 is an enlarged view of the frame VIII of Fig. 3.
- Fig. 9 is an enlarged view of the frame IX of Fig. 5.
- Fig. 10 is a exploded perspective view of a stack of filter elements;
- Fig. 11 is a perspective view of a filter comprising a plurality of filter elements.

### DETAILED DESCRIPTION OF EMBODIMENTS

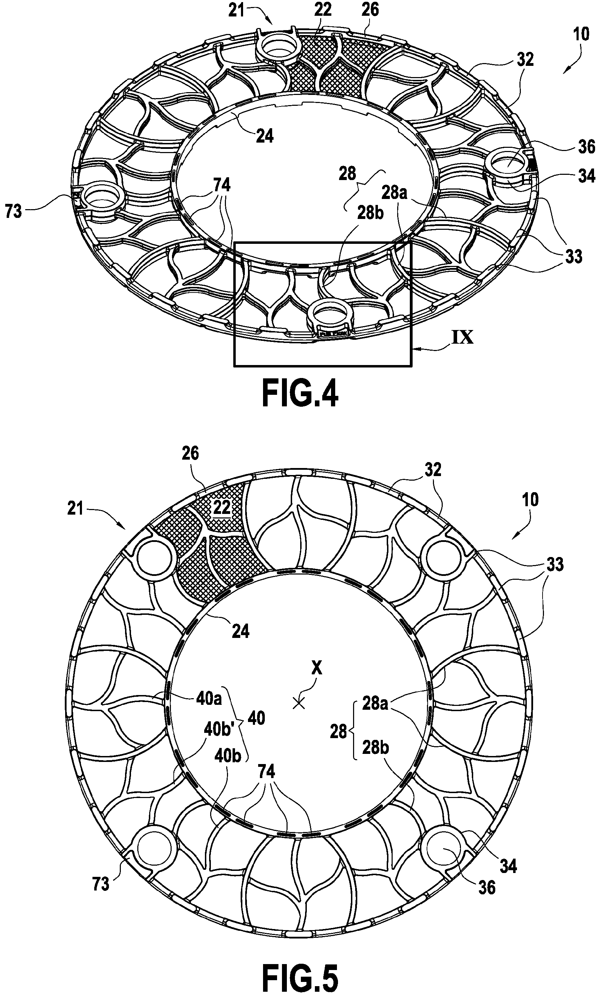

An embodiment of a filter 100 comprising a filter element 10 is described with reference to Figs. 1-6.

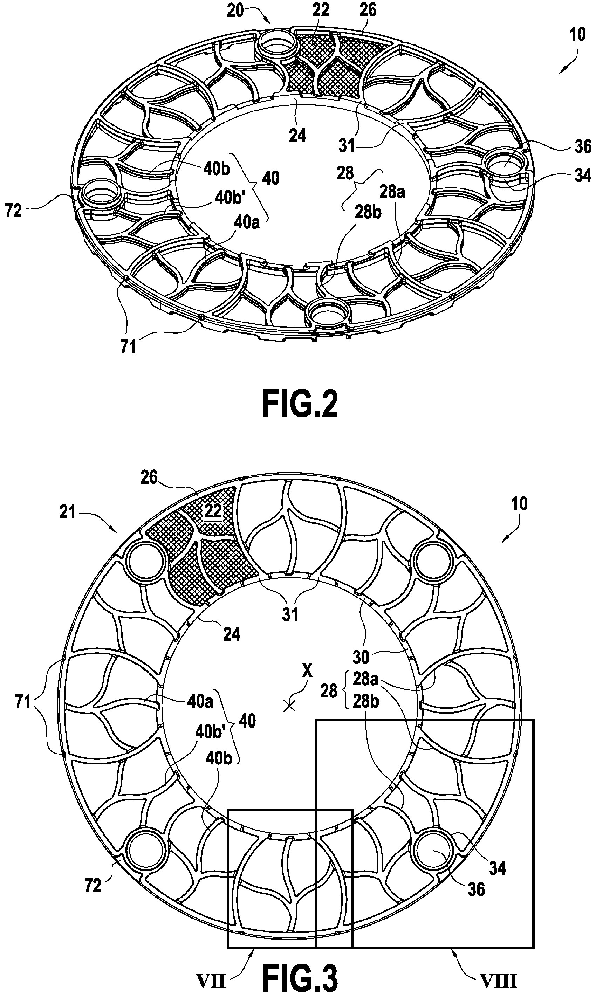

A filter element 10 according to an embodiment represented in Figs. 2-5 has an internal face 20, an external face 21, a filtering mesh 22, two concentric circular edges, respectively an inner edge 24 and an outer edge 26 between which said filtering mesh 22 extends. The concentric circular edges 24, 26 are circular about a central axis X, hereafter referred to as defining an axial direction. The inner edge 24 mainly extends in a plane which is perpendicular to the axial direction X, i.e. a radial plane. The outer edge 26 mainly extends in a plane which is perpendicular to the axial direction X, i.e. a radial plane.

In this embodiment, the diameter of the outer edge 26 is about 260 mm. Of course, other diameters are possible, including, for example diameters in the range from about 100 mm to about 600 mm.

The filter element 10 comprises main ribs 28 provided at least on the internal face 20. In this embodiment, as shown in Fig. 2, the main ribs 28 are provided in correspondence on the external face 21. Thus, if three similar filter elements 10 are stacked, both faces of filter element in the middle of the stack face the respective internal faces of the two other filter elements, and the main ribs provided on these respective faces interact to form compartments.

The main ribs 28 extend between the inner edge 24 and the outer edge 26, in the radial direction. The main ribs 28 are regularly distributed circumferentially in order to form sectors on said internal face 20, as shown in Fig. 1. In this embodiment, the main ribs 28 also form sectors on said external face 21, as shown in Fig. 2.

The inner edge 24 has inner passages 30 respectively communicating with corresponding ones of the sectors. The inner passages 30 are provided as notches or cutouts in the inner edge 24. The inner passages 30 are provided between consecutive main ribs 28. The inner passages 30 are provided on the internal face 20. Abutment portions 31 are left in the inner edge 24 between each inner passage 30.

As shown in Fig. 2, the outer edge 26 has outer passages 32 respectively communicating with corresponding ones of the sectors. The outer passages 32 are provided as notches or cutouts in the outer edge 26. At least one, and preferably two in present case, outer passage 32 is provided between consecutive main ribs 28. The passages 32 are provided on the external face 20. Abutment portions 33 are left in the outer edge 26 between each outer passage 32.

Some main ribs 28 connect directly the inner edge 24 to the outer edge 26: they are referred to as main ribs of the first type 28a. Other main ribs 28 connect the inner edge 24 to the outer edge 26 via an eyelet 34: they are referred to as main ribs of the second type 28b.

These eyelets 34 are circular and define holes 36 for passing assembly rods. These eyelets 34 are also configured so as to form male and female bushings for indexing two filter elements 10 relative to each other.

In the non-limiting example shown, all the main ribs 28 are curved over their whole lengths, that is to say from the inner edge 24 to the outer edge 26.

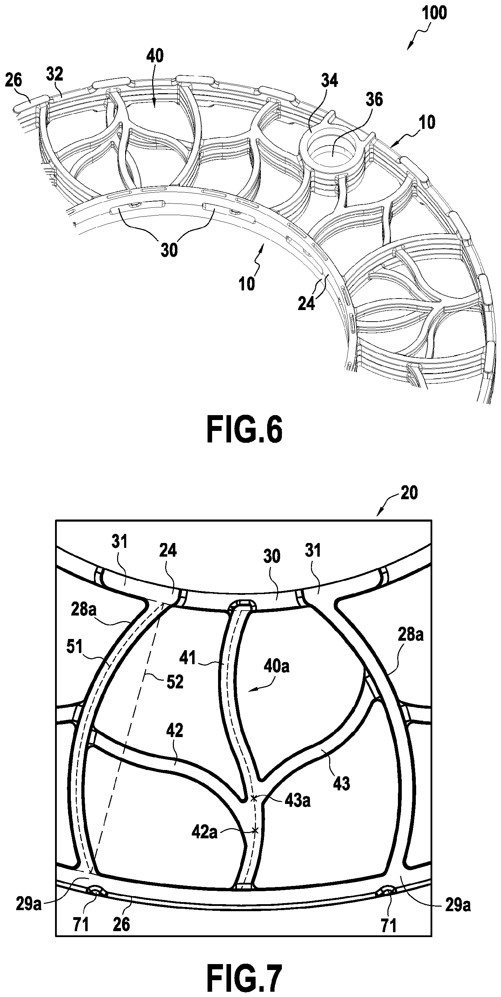

Specifically, in the present example, as better shown on Fig. 7, each main rib of the first type 28a comprises a single curve portion 51 extending from the inner edge 24 to the outer edge 26. The curve portion 51 therefore diverts from its chord 52.

However, of course, other configurations are possible. For instance, such a rib may have an S shape, that is to say may comprise two curve portions joined by an inflection point.

In the present example, the main ribs of the first type 28a are organized in pairs, the ribs of a given pair being symmetric the one with respect to the other.

The area in which a main rib of the first type 28a contacts the outer edge 26 is referred to as a contact area of the first type 29a. Each contact area of the first type 29a is provided with a notch 71 formed in the outer edge 26 at the junction between its outer surface and its external surface. This notch 71 is provided in the extension of the rib 28a and has a width substantially equal to the width of the rib 28a.

As explained above, each main rib of the second type 28b includes an eyelet 34. More specifically, in each main rib of the second type 28b, the eyelet 34 contacts the outer edge 26, therefore forming a contact area of the second type 29b. Also each main rib of the second type 28b includes an inner link 38 connecting the inner edge 24 to the eyelet 34.

This inner link 38 comprises a single curve portion 53 extending from the inner edge 24 to the eyelet 34. The curve portion 53 therefore diverts from its chord 54.

This outline of the eyelet 34 thus forms a second curve portion 55 connecting the first curve portion 53 to the outer edge 26 so that the main ribs of the second type 28b are also curved ribs in the meaning of the present disclosure.

In the present example, the main ribs of the second type 28b are organized in pairs, the ribs of a given pair being symmetric the one with respect to the other.

In addition, in each contact area of the second type 29b are provided two axial depressions 72, 73 provided in correspondence on the internal face 20 and on the external face 22. Particularly, the axial depressions 73 on the external face 21 are provided in abutment portions 33 of the outer edge 26. The width of these axial depressions 72, 73 is substantially equal to the inner diameter of the hole 36.

In the non-limiting example shown, each filter element 10 is divided into twelve sectors and has four eyelets 34 with bushings regularly spaced apart circumferentially. Such a filter element 10 has therefore eight main ribs of the first type 28a and four main ribs of the second type 28b. Depending in particular on its diametrical size, the filter element can have less or more sectors. For example, a filter element having an outer diameter of 100 to 150 mm may have 8 to 12 sectors, a filter element having an outer diameter of around 300 mm may have 16 sectors, and a filter element having an outer diameter of 500 to 600 mm may have 20 to 24 sectors.

The filter elements 10 may be manufactured by molding around the filtering mesh 22. In other words, they may be manufactured by injection molding or similar, wherein the filtering mesh 22 forms an insert in the mold. The molded portions may be made of metal (e.g. an aluminum alloy) or of plastics material, especially polymers. The main ribs 28 and the inner and outer edges 24, 26 may be coated in elastomer in order to avoid leaks between filter elements 10.

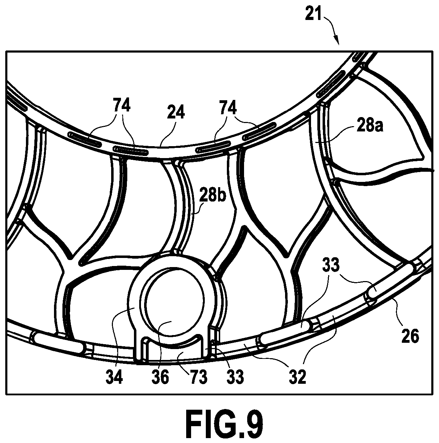

Also, as depicted on Fig. 9, the external face 21 of the inner edge 24 is provided with reliefs 74 each extending along the circumferential direction of the inner edge 24, at the back of the inner passages 30. In the present example, two identical reliefs, which are recesses 74, are provided at the back of each inner passage 30. However, in another example, a first relief could be a recess and a second relief could be a protrusion with a shape complementary to that of the recess.

During the functioning of the filter, for instance, the fluid to be filtered, e.g. oil or water, can enter the filter 100 through an inner passage 30 of the inner edge 24 of a filter element 10, cross the filtering mesh 22 to pass from the internal face 20 to the external face 21, whereby the liquid is filtered, and flow out of the filter element 10 through an outer passage 32 of the outer edge 26. The opposite flow direction is possible as well.

In addition, each one of the sectors is provided with at least one reinforcing rib 40 connecting at least a main rib 28 to at least a circular edge 24, 26. In the present example, each reinforcing rib 40 comprising several branches so as to connect both neighboring main ribs 30 and both circular edges 24, 26. Each reinforcing rib 40 is connected to the inner edge 24 substantially at the middle of an inner passage 24 and connected to the outer edge 26 between two successive outer passages 32.

The reinforcing ribs 40 are provided in correspondence on both sides of the filtering mesh 22, that is to say both on the internal face 20 and on the external face 21. Their axial thickness is lower than the axial thickness of the main ribs 28 so that both surfaces of the reinforcing ribs 40 are recessed with respect to the surfaces of the main ribs 28.

Some reinforcing ribs 40 are connected to at least a main rib of the second type 28b: they are referred to as reinforcing ribs of the second type 40b, 40b'. The other reinforcing ribs 40, which are not connected to a main rib of the second type 28b, are referred to as reinforcing ribs of the first type 40a.

These reinforcing ribs 40 can have different shapes but are preferably curved over their whole lengths: this means that every branch of these reinforcing ribs is curved. The branches can be joined the ones to the others either by angular points or by singular points, preferably by inflection points.

In the present case, the reinforcing ribs of the first type 40a all share the same configuration, having the shape of a letter Psi Ψ. Specifically, such ribs comprise a central link 41, connecting the inner edge 24 and the outer edge 26, and two converging links 42, 43 each extending from a distinct neighboring main rib 28a in inclined directions converging outwardly so as to join the central link 41 in its outer half. Preferably, the joining point 42a of the first converging link 42 is slightly offset outwardly with respect to the joining point 43a of the second conversing link 43.

Here, the central link 41 comprises two curve portions joined by an inflection point. Similarly, each converging link 42, 43 comprise two curve portions joined by an inflection point.

In the present case, the reinforcing ribs of the second type 40b, 40b' may have two different configurations. Half of them, identified by the reference 40b, have a Psi Ψ configuration analogous to that described above for the reinforcing ribs of the first type 40a: thus, they each include a central link 41 and two converging links 42, 43. In such a case, preferably, the first converging link 42, which is the link connected to the main rib of the second type 28b, is connected to the eyelet 34 of said main rib 28b, preferably tangentially to the outline of the eyelet 34.

The other half of the reinforcing ribs or the second type, identified by the reference 40b', has an Aleph 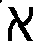 configuration. Specifically, each reinforcing rib of this configuration 40b' comprises a central link 44, connecting the inner edge 24 and the outer edge 26, a diverging link 45, diverging outwardly from the inner half of the central link 44 so as to join the neighboring main rib of the second type 28b, and a converging link 46, extending from the neighboring main rib of the first type 28a and converging outwardly so as to join the central link 41 it its outer half. The diverging link 45 is connected to the eyelet 34 of the main rib of the second type 28b.

Here, the central link 44 comprises two curve portions joined by an inflection point. As to the diverging and converging links 45, 46, they may comprise either one or two curve portions.

In the present example, each main rib of the second type 28b is connected with a reinforcing rib of the Psi Ψ configuration 40b on one side and with a reinforcing rib of the Aleph 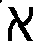 configuration 40b' on the other side.

As shown in Figs. 2-5, the reinforcing ribs 40 divide the filtering mesh surface of the sector in substantially equal areas.

As illustrated in Fig. 6, the filter elements 10 are configured to be assembled against each other so that their respective internal faces 20 face each other so as to define a space between them. Said space is circumferentially compartmented by the contacting main ribs 28 of said internal faces. On the other hand, the main ribs 28 provided on the external face 21 do not have to contact one another. Compartmenting sectors on the side of the filtering mesh 22 on which non-filtered liquid is introduced enables de-clogging the filtering mesh 22 by backwashing, as is known *per se* in the art.

A filter 100 is made by assembling together at least two filter elements 10, as shown in Fig. 6. To obtain a filter of desired filter capacity, it suffices to stack and assemble together a desired number of individual filters 100 like the filter shown in Fig. 6.

The reinforcing ribs 40 extending on either sides of one of the main ribs 28 are connected to said one main rib 28 at different locations in the radial direction. Thanks to this feature, when two filter elements 10 are assembled against each other so that their respective internal faces 20 face each other, the reinforcing ribs 40 of the respective filter elements 10 do not entirely face each other in the axial direction. That is, when two filter elements 10 are assembled against each other so that their respective internal faces 20 face each other, the reinforcing ribs 40 of facing sectors of the respective filter elements 10 are shifted with respect to each other in a radial plane. Thus, the reinforcing ribs of the adjacent filter elements may have at least parts which do not overlap axially, which facilitates the flow of fluid.

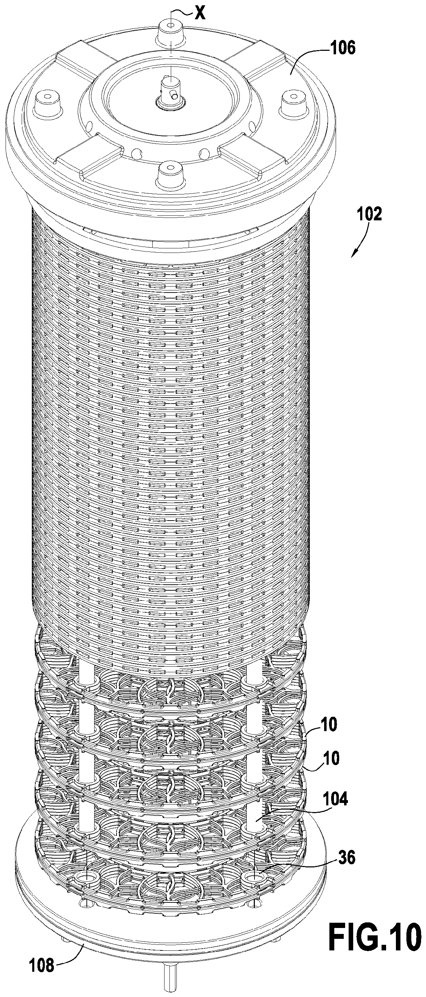

Figure 10 illustrates a stack 102 comprising a plurality of filter elements 10 stacked along an axis X. Filter elements 10 are assembled in pairs with respective identical, similar or complementary filter elements 10, as previously described. In each pair, filter elements 10 are arranged one against the other, so that their respective internal faces 20 face each other and the contacting main ribs 28 of said respective internal faces 20 partition the space between said internal faces 20.

Assembly rods 104 are inserted in the holes 36 of the filter elements 10, thereby ensuring alignment and axial correspondence of the filter elements 10.

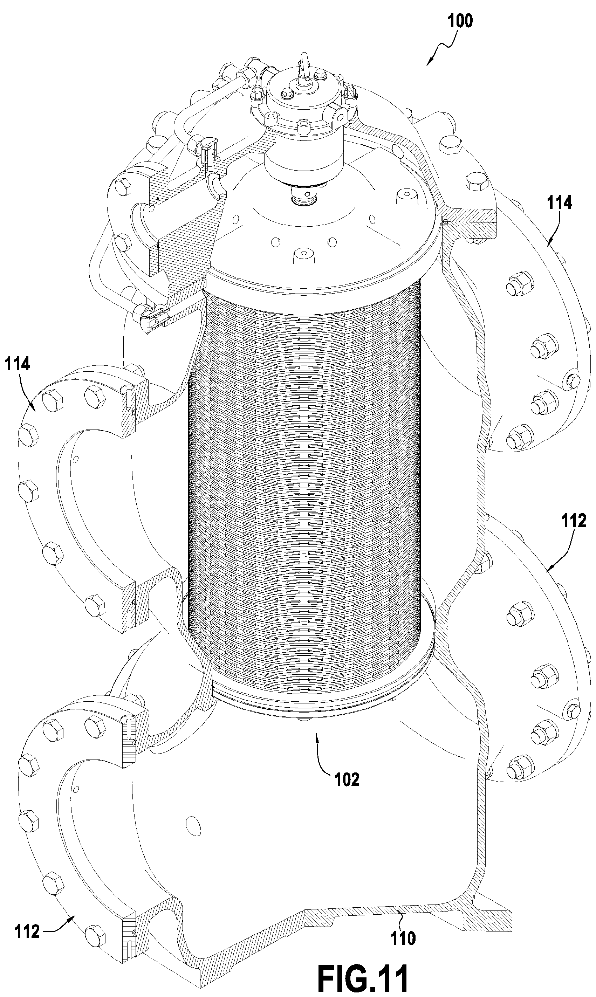

A filter 100 is shown in perspective in Fig. 11. The filter 100 comprises a housing 110 and a stack 102 of filter elements is arranged within the housing 110. Thus, the filter 100 comprises a plurality of filter elements 10, said filter elements being stacked along the axis X.

The filter 100 comprises two inlet portions 112 and two outlet portions 114. The filter 100 may comprise one or more inlet portions 112, and/or one or more outlet portions 114. In this embodiment, the inlet portions 112 are fluidly connected to the passages 30 of the inner edges 24 of the filter elements 10, while the outlet portions 114 are fluidly connected to the passages 32 of the outer edges 26. However, the flow direction within the housing 110 and the stack 102 may be reversed.

The stack 102 of filter elements is fastened to the housing 110 in a conventional manner.

Although the present invention has been described by referring to specific exemplary embodiments, modifications may be provided to these examples without the departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A filter element (10), having an internal face (20), an external face (21), a filtering mesh (22), two concentric edges, respectively an inner edge (24) and an outer edge (26) between which said filtering mesh (22) extends, and main ribs (28) provided at least on the internal face (20), said main ribs (28) extending substantially radially between said edges (24, 26) and being distributed circumferentially in order to form sectors on said internal face (20), said filter element (10) being configured to be assembled against a corresponding filter element so that said internal face (20) faces the internal face of said corresponding filter element and said main ribs (28) delimiting the sectors act to circumferentially form compartments in a space between said internal face and said corresponding filter element, said inner edge (24) having inner passages (30) respectively communicating with corresponding ones of the sectors,
wherein at least one rib (28, 40) extending between said edges (24, 26) is a curved rib which is curved over its whole length.

2. The filter element as claimed in claim 1, wherein at least some of the main ribs (28), preferably most of the main ribs (28) or even all of the main ribs (28), are curved ribs.

3. The filter element as claimed in claim 1 or 2, wherein the main ribs (28) include main ribs of a first type (28a), connecting directly the inner and outer edges, and main ribs of a second type (28b), connecting the inner and outer edges (24, 26) via an eyelet (34) defining an assembling hole (36).

4. The filter element as claimed in claim 3, wherein at least some of the main ribs of the first type (28a), preferably most of the main ribs of the first type (28a) or even all of the main ribs of the first type (28a), are curved ribs, and
wherein said curved main ribs of the first type (28a) each comprise a single curve portion.

5. The filter element as claimed in claim 3 or 4, wherein at least some of the main ribs of the second type (28b), preferably most of the main ribs of the second type (28b) or even all of the main ribs of the second type (28b), are curved ribs,
wherein said curved main ribs of the second type (28b) each comprise an inner link (38) connecting their eyelet (34) to the inner edge (24), said inner link (38) comprising a single curve portion, and
wherein said inner link (38) is substantially tangent to the outline of the eyelet (34).

6. The filter element as claimed in any one of claims 1 to 5, wherein at least some of the sectors, preferably most of the sectors or even all of the sectors, are each provided with at least one reinforcing rib (40) connecting at least a main rib (28) to an edge (24, 26), and
wherein at least some of the reinforcing ribs (40), preferably most of the reinforcing ribs (40) or even all of the reinforcing ribs (40), are curved ribs.

7. The filter element as claimed in claims 3 and 6, wherein the reinforcing ribs (40) include reinforcing ribs of a first type (40a), not connected to any main rib of the second type (28b), and reinforcing ribs of a second type (40b, 40b'), connected to at least one main rib of the second type (28b), and
wherein at least one reinforcing rib of the second type (40b, 40b') is connected to the eyelet (34) of said main rib of the second type (28b).

8. The filter element as claimed in claim 6 or 7, wherein at least some of the reinforcing ribs (40a, 40b) have a Psi shape (Ψ), including a central link (41), connecting the inner and outer edges (24, 26), and two converging links (42, 43), each extending from a distinct main rib (28) and converging toward the outer or the inner side to join the central link (41), preferably at offset joining points (42a, 43a).

9. The filter element as claimed in any one of claims 6 to 8, Wherein at least some of the reinforcing ribs (40b') have an Aleph shape (N) including a central link (44), connecting the inner and outer edges (24, 26), a diverging link (45), diverging from the central link (44) toward the outer side to connect a first main rib (28), and a converging link (46), converging from the second main rib (28) toward the outer side to join the central link (44).

10. The filter element as claimed in any one of claims 6 to 9, wherein said reinforcing rib (40) divides the filtering mesh surface of the sector in areas of substantially similar size.

11. The filter element as claimed in any one of claims 1 to 10, wherein the outer edge (26) comprises a recess (71, 72, 73) at least in a contact area (29a, 29b) where a main rib (28) contacts the outer edge (26).

12. The filter element as claimed in any one of claims 1 to 11, wherein the inner edge (24) comprises at least one relief (74) provided on the external face (21) at the back of at least one inner passage (24).

13. The filter element as claimed in any one of claims 1 to 12, wherein the main ribs (28) and/or the reinforcing ribs (40) are made of polymer.

14. A pair of filter elements as claimed in any one of claims 1 to 13, arranged one against the other, so that their respective internal faces face each other and the contacting main ribs (28) of said respective internal faces (20) partition the space between said internal faces (20).

15. A filter (100) comprising a plurality of filter elements as claimed in any one of claims 1 to 13, said filter elements (10) being stacked along an axis (X).

## Patentansprüche

1. Filterelement (10) mit einer Innenfläche (20), einer Außenfläche (21), einem Filternetz (22), zwei konzentrischen Rändern, einem inneren Rand (24) bzw. einem äußeren Rand (26), zwischen denen sich das Filternetz (22) erstreckt, und Hauptrippen (28), die mindestens auf der Innenfläche (20) bereitgestellt sind, wobei sich die Hauptrippen (28) im Wesentlichen radial zwischen den Rändern (24, 26) erstrecken und in Umfangsrichtung verteilt sind, um Sektoren auf der Innenfläche (20) zu bilden, wobei das Filterelement (10) so konfiguriert ist, dass es gegen ein entsprechendes Filterelement montiert werden kann, sodass die Innenfläche (20) der Innenfläche des entsprechenden Filterelements gegenüberliegt, und die Hauptrippen (28), die die Sektoren begrenzen, dazu dienen, in einem Raum zwischen der Innenfläche und dem entsprechenden Filterelement in Umfangsrichtung Abteile zu bilden, wobei der innere Rand (24) innere Durchgänge (30) aufweist, die jeweils mit entsprechenden der Sektoren in Verbindung stehen,
wobei mindestens eine Rippe (28, 40), die sich zwischen den Rändern (24, 26) erstreckt, eine gekrümmte Rippe ist, die über ihre gesamte Länge gekrümmt ist.

2. Filterelement nach Anspruch 1, wobei mindestens einige der Hauptrippen (28), vorzugsweise die meisten der Hauptrippen (28) oder sogar alle der Hauptrippen (28), gekrümmte Rippen sind.

3. Filterelement nach Anspruch 1 oder 2, wobei die Hauptrippen (28) Hauptrippen eines ersten Typs (28a), die den inneren und den äußeren Rand direkt verbinden, und Hauptrippen eines zweiten Typs (28b) einschließen, die den inneren und den äußeren Rand (24, 26) über eine Öse (34) verbinden, die ein Montageloch (36) definiert.

4. Filterelement nach Anspruch 3, wobei mindestens einige der Hauptrippen des ersten Typs (28a), vorzugsweise die meisten der Hauptrippen des ersten Typs (28a) oder sogar alle der Hauptrippen des ersten Typs (28a), gekrümmte Rippen sind, und
wobei die gekrümmten Hauptrippen des ersten Typs (28a) jeweils einen einzelnen Krümmungsabschnitt umfassen.

5. Filterelement nach Anspruch 3 oder 4, wobei mindestens einige der Hauptrippen des zweiten Typs (28b), vorzugsweise die meisten der Hauptrippen des zweiten Typs (28b) oder sogar alle der Hauptrippen des zweiten Typs (28b), gekrümmte Rippen sind,
wobei die gekrümmten Hauptrippen des zweiten Typs (28b) jeweils ein inneres Verbindungsglied (38) umfassen, das ihre Öse (34) mit dem inneren Rand (24) verbindet, wobei das innere Verbindungsglied (38) einen einzigen Krümmungsabschnitt umfasst, und
wobei das innere Verbindungsglied (38) die Kontur der Öse (34) im Wesentlichen tangiert.

6. Filterelement nach einem der Ansprüche 1 bis 5, wobei mindestens einige der Sektoren, vorzugsweise die meisten der Sektoren oder sogar alle der Sektoren, jeweils mit mindestens einer Verstärkungsrippe (40) versehen sind, die mindestens eine Hauptrippe (28) mit einem Rand (24, 26) verbindet, und
wobei mindestens einige der Verstärkungsrippen (40), vorzugsweise die meisten der Verstärkungsrippen (40) oder sogar alle der Verstärkungsrippen (40), gekrümmte Rippen sind.

7. Filterelement nach den Ansprüchen 3 und 6, wobei die Verstärkungsrippen (40) Verstärkungsrippen eines ersten Typs (40a), die nicht mit einer Hauptrippe des zweiten Typs (28b) verbunden sind, und Verstärkungsrippen eines zweiten Typs (40b, 40b') einschließen, die mit mindestens einer Hauptrippe des zweiten Typs (28b) verbunden sind, und
wobei mindestens eine Verstärkungsrippe des zweiten Typs (40b, 40b') mit der Öse (34) der Hauptrippe des zweiten Typs (28b) verbunden ist.

8. Filterelement nach Anspruch 6 oder 7, wobei mindestens einige der Verstärkungsrippen (40a, 40b) eine Psi-Form (ψ) aufweisen, die ein zentrales Verbindungsglied (41), das den inneren und den äußeren Rand (24, 26) verbindet, und zwei konvergierende Verbindungsglieder (42, 43) einschließen, die sich jeweils von einer bestimmten Hauptrippe (28) aus erstrecken und zur äußeren oder inneren Seite hin konvergieren, um sich mit dem zentralen Verbindungsglied (41) zu verbinden, vorzugsweise an versetzten Verbindungspunkten (42a, 43a).

9. Filterelement nach einem der Ansprüche 6 bis 8, wobei mindestens einige der Verstärkungsrippen (40b') eine Aleph-Form ( 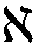 ) aufweisen, die ein zentrales Verbindungsglied (44), das den inneren und den äußeren Rand (24, 26) verbindet, ein divergierendes Verbindungsglied (45), das von dem zentralen Verbindungsglied (44) zur Außenseite hin divergiert, um eine erste Hauptrippe (28) zu verbinden, und ein konvergierendes Verbindungsglied (46) einschließen, das von der zweiten Hauptrippe (28) zur Außenseite hin konvergiert, um sich mit dem zentralen Verbindungsglied (44) zu verbinden.

10. Filterelement nach einem der Ansprüche 6 bis 9, wobei die Verstärkungsrippe (40) die Filternetzoberfläche des Sektors in Bereiche mit wesentlich gleicher Größe unterteilt.

11. Filterelement nach einem der Ansprüche 1 bis 10, wobei der äußere Rand (26) mindestens in einem Kontaktbereich (29a, 29b), wo eine Hauptrippe (28) den äußeren Rand (26) berührt, eine Ausnehmung (71, 72, 73) umfasst.

12. Filterelement nach einem der Ansprüche 1 bis 11, wobei der innere Rand (24) mindestens ein Relief (74) umfasst, das an der Außenfläche (21) auf der Rückseite mindestens eines inneren Durchgangs (24) bereitgestellt ist.

13. Filterelement nach einem der Ansprüche 1 bis 12, wobei die Hauptrippen (28) und/oder die Verstärkungsrippen (40) aus Polymer bestehen.

14. Paar von Filterelementen nach einem der Ansprüche 1 bis 13, die so gegeneinander angeordnet sind, dass ihre jeweiligen Innenflächen einander gegenüberliegen, und die sich berührenden Hauptrippen (28) der jeweiligen Innenflächen (20) den Raum zwischen den Innenflächen (20) unterteilen.

15. Filter (100), der eine Vielzahl von Filterelementen nach einem der Ansprüche 1 bis 13 umfasst, wobei die Filterelemente (10) entlang einer Achse (X) gestapelt sind.

## Revendications

1. Elément filtrant (10), comportant une face interne (20), une face externe (21), une maille filtrante (22), deux bords concentriques, respectivement un bord interne (24) et un bord externe (26), entre lesquels s'étend ladite maille filtrante (22), et des nervures principales (28) disposées au moins sur la face interne (20), lesdites nervures principales (28) s'étendant de manière sensiblement radiale entre lesdits bords (24, 26) et étant réparties circonférentiellement pour former des secteurs sur ladite face interne (20), ledit élément filtrant (10) étant configuré pour être assemblé contre un élément filtrant correspondant, de sorte que ladite face interne (20) fait face à la face interne dudit élément filtrant correspondant, et lesdites nervures principales (28) délimitant les secteurs agissent pour former circonférentiellement des compartiments dans un espace entre ladite face interne et ledit élément filtrant correspondant, ledit bord interne (24) comportant des passages internes (30) communiquant respectivement avec des secteurs correspondants parmi les secteurs,
dans lequel au moins une nervure (28, 40) s'étendant entre lesdits bords (24, 26) est une nervure courbée qui est courbée au-delà de l'ensemble de sa longueur.

2. Elément filtrant selon la revendication 1, dans lequel au moins certaines des nervures principales (28), de préférence la plupart des nervures principales (28) ou même l'ensemble des nervures principales (28), sont des nervures courbées.

3. Elément filtrant selon la revendication 1 ou la revendication 2, dans lequel les nervures principales (28) incluent des nervures principales d'un premier type (28a) connectant directement les bords interne et externe, et des nervures principales d'un deuxième type (28b), connectant les bords interne et externe (24, 26) via un œillet (34) définissant un trou d'assemblage (36).

4. Elément filtrant selon la revendication 3, dans lequel au moins certaines des nervures principales du premier type (28a), de préférence la plupart des nervures principales du premier type (28a), ou même l'ensemble des nervures principales du premier type (28a), sont des nervures courbées ; et
dans lequel lesdites nervures principales courbées du premier type (28a) comprennent chacune une seule partie courbée.

5. Elément filtrant selon la revendication 3 ou la revendication 4, dans lequel au moins certaines des nervures principales du deuxième type (28b), de préférence la plupart des nervures principales du deuxième type (28b), ou même l'ensemble des nervures principales du deuxième type (28b), sont des nervures courbées ;
dans lequel lesdites nervures principales courbées du deuxième type (28b) comprennent chacune un lien interne (38) connectant leur œillet (34) au bord interne (24), ledit lien interne (38) comprenant une seule partie courbée ; et
dans lequel ledit lien interne (38) est sensiblement tangent au contour de l'œillet (34).

6. Elément filtrant selon l'une quelconque des revendications 1 à 5, dans lequel au moins certains des secteurs, de préférence la plupart des secteurs ou même l'ensemble des secteurs, sont chacun dotés d'au moins une nervure de renforcement (40) connectant au moins une nervure principale (28) à un bord (24, 26) ; et
dans lequel au moins certaines des nervures de renforcement (40), de préférence la plupart des nervures de renforcement (40), ou même l'ensemble des nervures de renforcement (40), sont des nervures courbées.

7. Elément filtrant selon les revendications 3 et 6, dans lequel les nervures de renforcement (40) incluent des nervures de renforcement d'un premier type (40a), non connectées à une quelconque nervure principale du deuxième type (28b), et des nervures de renforcement d'un deuxième type (40b, 40b') connectées à au moins une nervure principale du deuxième type (28b) ; et
dans lequel au moins une nervure de renforcement du deuxième type (40b, 40b') est connectée à l'œillet (34) de ladite nervure principale du deuxième type (28b).

8. Elément filtrant selon la revendication 6 ou la revendication 7, dans lequel au moins certaines des nervures de renforcement (40a, 40b) ont une forme en Psi (ψ) incluant un lien central (41), connectant les bords interne et externe (24, 26), et deux liens convergents (42, 43) s'étendant chacun à partir d'une nervure principale distincte (28) et convergeant vers le côté externe ou interne pour rejoindre le lien central (41), de préférence au niveau de points de liaison décalés (42a, 43a).

9. Elément filtrant selon l'une quelconque des revendications 6 à 8, dans lequel au moins certaines des nervures de renforcement (40b') ont une forme en Aleph ( 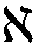 ) incluant un lien central (44) connectant les bords interne et externe (24, 26), un lien divergent (45) divergeant du lien central (44) vers le côté externe pour connecter une première nervure principale (28), et un lien convergent (46) convergeant de la deuxième nervure principale (28) vers le côté externe pour rejoindre le lien central (44).

10. Elément filtrant selon l'une quelconque des revendications 6 à 9, dans lequel ladite nervure de renforcement (40) divise la surface de maille filtrante du secteur en des zones ayant sensiblement la même taille.

11. Elément filtrant selon l'une quelconque des revendications 1 à 10, dans lequel le bord externe (26) comprend un évidement (71, 72, 73) au moins dans une zone de contact (29a, 29b), où une nervure principale (28) contacte le bord externe (26).

12. Elément filtrant selon l'une quelconque des revendications 1 à 11, dans lequel le bord interne (24) comprend au moins un relief (74) disposé sur la face externe (21) au niveau de l'arrière d'au moins un passage interne (24).

13. Elément filtrant selon l'une quelconque des revendications 1 à 12, dans lequel les nervures principales (28) et/ou les nervures de renforcement (40) sont composées de polymère.

14. Paire d'éléments filtrants selon l'une quelconque des revendications 1 à 13, agencés l'un contre l'autre, de sorte que leurs faces internes respectives se font face, et les nervures principales de contact (28) desdites faces internes respectives (20) divisent l'espace entre lesdites faces internes (20).

15. Filtre (100), comprenant une pluralité d'éléments filtrants selon l'une quelconque des revendications 1 à 13, lesdits éléments filtrants (10) étant empilés le long d'un axe (X).
